# EUROPÄISCHE PATENTANMELDUNG

(11) **EP 0 932 208 A1**
(43) Veröffentlichungstag der Anmeldung: **28.07.1999**
(21) Anmeldenummer: 98109358.6
(22) Anmeldetag: 22.05.1998
(51) Int. Cl.: H01L 41/09

(54) **Piezoelektrischer Motor**

(30) Priorität: 17.12.1997 DE 29722319 U
(71) Anmelder: CERA Handelsgesellschaft mbH, D-87640 Biessenhofen (DE)
(72) Erfinder: Loh, Walter, 87600 Kaufbeuren (DE)
(74) Vertreter: Kern, Wolfgang, Dipl.-Ing.

(57) **Zusammenfassung**

Piezoelektrischer Motor, bestehend aus einem Stator mit an ihm angebachtem piezoelektrischen Oszillator, der mit einer Anordnung zur Spannungsbereitstellung in Verbindung steht und von einem Fassungskörper abgedeckt ist, sowie aus einem Rotor, der mit dem Oszillator in Reibschlußverbindung steht und dadurch von letzterem antreibbar ist.

Die Aufgabe der Erfindung besteht deshalb darin, den bekannten piezoelektrischen Motor so weiter zu entwickeln, daß seine Funktionstüchtigkeit verbessert und seine Lebensdauer verlängert werden.

Dies wird dadurch erreicht, daß von den drei Teilen, nämlich Stator (4), Fassungskörper (5) und Rotor (6), wenigstens der Rotor (6) aus einer thermoplastischen Verbundwerkstoffmasse mit einem Glasfaseranteil und/oder mineralischen Füllstoffanteil besteht, die ein teilkristallines Polymer bildet, das eine kristalline Phase mit regelmäßig im Raum angeordneten Makromolekülen und eine amorphe Phase aus in einem ungeordneten Zustand befindlichen Makromolekülen aufweist, und im Spritzgußverfahren hergestellt ist.

## Beschreibung

Die Erfindung betrifft einen piezoelektrischen Motor gemäß dem Oberbegriff des Anspruchs 1.

Derartige piezoelektrische Motoren sind aus der DE 44 38 876 A1 bekannt.

Derartige Motoren, die auch als Wanderwellenmotoren bezeichnet werden, beruhen auf dem Prinzip der Umwandlung elektrischer Energie in die Drehbewegung eines Rotors mit Hilfe piezoelektrischer Oszillatoren.

Im Laufe der Weiterentwicklung derartiger Motoren ist es immer wieder Ziel gewesen, ihre Konstruktion zu vereinfachen und eine höhere Fünktionssicherheit zu schaffen, wobei sich über den Umfang des Oszillatorkörpers ausbreitende Longitudinalwellen erzeugt werden, die den Oszillatorkörper in einem ständigen elastischen Kontakt mit dem Rotor halten und aufgrund der Bewegung der Wellenpunkte auf einer Kreisbahn im Oszillatorkörper auf den Rotor ein Drehmoment übertragen, das zum Antrieb beliebiger an den Rotor angeschlossener zu bewegender Teile dient. Dabei ist für die Betriebssicherheit bzw. den Wirkungsgrad eines solchen Motors von entsheidender Bedeutung, daß zwischen der Rotoroberfläche und der an diesem anliegenden Oberfläche des Oszillators eine Reibungs- bzw. Klemmwirkung erzeugt wird, die das Entstehen maximaler Drehmomente ermöglicht, welche nur durch die Materialbeständigkeit der Kontaktflächenmaterialien begrenzt werden.

Es hat sich nun gezeigt, daß die Kontaktfläche des Oszillators, zu dessen Fertigung Piezokeramik mit hoher mechanischer Güte verwendet wird, bei dem eingangs genannten Motor mit einer dünnen abriebfesten Schicht bedeckt wird, um den gewünschten Reibschluß zwischen Oszillator und Rotoroberfläche herzustellen und über eine möglichst lange Zeitspanne aufrecht zu erhalten Beim Anpressen der Oberfläche des Rotors an die Oberfläche des Osziallators übertragen die sich auf einer geschlossenen Kreisbahn bewegenden Punkte des Osziallators dann durch Reibung ein Drehmoment auf den Rotor, was diesen zur Drehung veranlaßt. Obgleich als Reibschicht eine Keramikschicht auf Al₂O₃-Basis bzw. eine Metallschicht beispielsweise aus groben Cr, Ni, W oder deren Verbindungen mit einem anderen Element zur Erzielung einer hohen Abriebfestigkeit der Schicht verwendet wurde sowie zur Ermöglichung eines hohen Reibungskoeffizienten, läßt diese Abriebfestigkeit dennoch zu wünschen übrig und ist jedenfalls nicht so geartet, daß derartige Motoren diesbezüglich als langzeitbeständig bzw. verschleißfest anzusehen sind.

Die Aufgabe der Erfindung besteht deshalb darin, den bekannten piezoelektrischen Motor so weiter zu entwickeln, daß seine Funktionstüchtigkeit verbessert und seine Lebensdauer verlängert werden.

Diese Aufgabe wird erfindungsgemäß dadurch gelöst, daß von den drei Teilen, nämlich Stator, Fassungskörper und Rotor, wenigstens der Rotor aus einer thermoplastischen Verbundwerkstofformmasse mit einem Glasfaseranteil und/oder mineralischen Füllstoffanteil besteht, die ein teilkristallines Polymer bildet, das eine kristalline Phase mit regelmäßig im Raum angeordneten Makromolekülen und eine amorphe Phase aus in einem ungeordneten Zustand befindlichen Makromolekülen aufweist, und im Spritzgußverfahren hergestellt ist.

Es ist nun zwar aus der eingangs genannt: DE 44 38 876 A1 bereits bekannt, Bestandteile des Motors mit Ausnahme des Oszillators im Gießverfahren aus Plastematerial zu fertigen, jedoch sind bisher über Beschaffenheit und Zusammensetzung derartiger Plastematerialen keine Angaben gemacht worden, so daß der Fachmann in diesem Punkt auch nicht auf brauchbare Vorschläge zurückgreifen konnte. Andererseits ist ohne weiteres einsehbar, daß die Beschaffenheit eines solchen Plastematerials von entscheidender Bedeutung für die Lebensdauer beispielsweise des Rotors ist, da dieser in standiger dynamischer Reibberührung mit dem Rotor steht, um letzteren anzutreiben.

Es wurde festgestellt, daß insbesondere für den Rotor ein verstärker duroplastischer Kunststoff der bezeichneten Art als Werkstoff mit der verlangten Dauerstandsfestigkeit für den vorliegenden speziellen Anwendungsfall geeignet ist, da er eine sehr hohe Steifigkeit, verbunden mit hoher Widerstandsfähigkeit gegenüber mechanischen Beanspruchungen sowie eine geringe Schwindung beim Spritzgießen und einen sehr niedrigen thermischen Ausdehnungskoeffzienten, verbunden mit guten thermomechanischen Eigenschaften aufweist und dem aus ihm hergestellten Rotorkörper eine ausgezeichnete Oberflächenbeschaffenheit gibt.

Weitere vorteilhafte Ausgestaltungen der Erfindung sind in den Unteransprüchen gekennzeichnet.

Die Erfindung wird nachfolgend anhand des in der Zeichnung dargestellten Ausführungsbeispiels naher erläutert. In der Zeichnung zeigen:
- Fig. 1: eine perspektivische Zusammenstellungszeichnung der wesentlichen Teile des erfindungsgemäßen piezoelektrischen Motors vor seiner Montage,
- Fig. 2: eine schematische Seitenansicht des zusammengebauten Motors,
- Fig. 3: eine Radialschnittansicht des Rotors,
- Fig. 4: eine Radialschnittansicht des Fassungskörpers,
- Fig. 5: eine Radialschnittansicht des Stators des erfindungsgemäßen piezoelektrischen Motors und
- Fig. 6: einen schematischen Ouerschnittsaufbau des Verbundwerkstoffes im Bereich der Rotorwand.

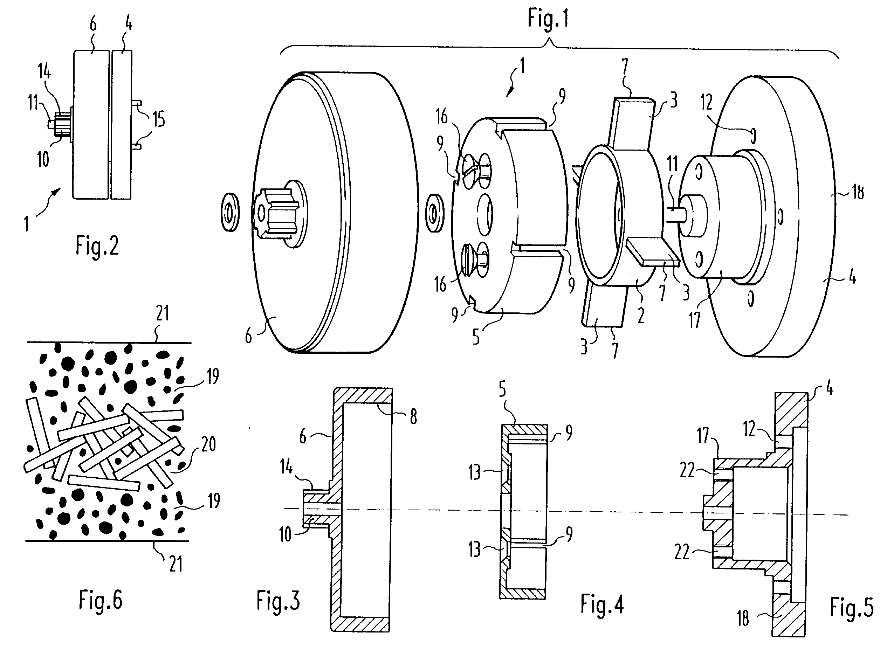

Wie aus Fig. 1 ersichtlich, besteht der piezoelektrische Motor 1 aus vier Hauptteilen nämlich dem Stator 4, dem Oszillator 2, dem Fassungskörper 5 und dem Rotor 6, die im zusammengebauten Zustand, der aus Fig. 2 ersichtlich ist, ineinandergesetzt und miteinander verbunden sind. Der Oszillator 2 ist aus einem piezoelektrischen Material gefertigt und bildet einen ring, aus dessen äußerer Oberfläche Lamellen 3 herausragen und der auf eine zentrische, zylindrische Auskragung 17 des Stators 4, der eine zylindrische Scheibe 18 bildet, aufgesteckt wird. Der Stator 4 ist insgesamt ein zylindrisch geformter Hohlkörper, wie aus Fig. 5 ersichtlich, bestehend aus Polyamid mit einem 20- bis 30%igen Glasfaseranteil, und ist im Spritzgußverfahren gefertigt worden.

Der Fassungskörper 5 ist ebenfalls ein zylindrischer Hohlkörper in Form einer Schale, wie aus Fig. 4 hervorgeht, und weist in seiner zylindrischen Wandung axial parallele Schlitze 9 auf, durch die beim Aufstecken des Fassungskörpers auf den Oszillator 2 und damit auch auf die Auskragung 17 des Stators 4 die Lamellen 3 des Oszillators hindurchtreten. Der Fassungskörper besteht gleichfalls aus einem glasfaserverstärkten Polyamid, wobei der Glasfaseranteil ebenfalls zwischen 20 und 30 Vol.-% betragen kann und ist wie der Stator 4 im Spritzgußverfähren hergestellt. Er wird mit Hilfe der Schrauben 16, die in dem Boden des Fassungskörpers befindliche Löcher 13 durchgreifen und in die Gewindebohrungen 22 der Auskragung 17 eingreifen, auf dem Stator 4 befestigt.

Die so miteinander verbundenen Teile, nämlich Stator 4, Oszillator 2 und Fassungskörper 5 werden dann mit dem Rotor 6 zusammengebaut, der ebenfalls als zylindrischer, schalenförmiger Hohlkörper ausgebildet ist, wie aus Fig. 3 ersichtlich, und aus einer thermoplastischen Verbundwerkstoffmasse auf der Basis von Polyarylamid im Spritzgußverfahren hergestellt ist und einen E-Modul von bis zu 23 GPa bei 20 °C, eine Biegefestigkeit bis zu 400 MPa bei 20 °C, einen niedrigen thermischen Ausdehnungskoeffizienten, vergleichbar dem von Metallen, einen Elastizitätsmodul im Biegeversuch von bis zu 7 GPa bei 140 °C und eine geringe Kriechneigung aufweist, letztere gekennzeichnet durch eine bleibende Verformung nach 1.000stündiger Belastung bei 50 MPa und 50 °C von unter 1 %.

Die Innenwandoberfläche 8 des Rotors 6 weist eine Struktur auf, die entweder beim Spritzgießen dieses Teils hergestellt wird oder später durch eine mechanische Bearbeitung und dazu dient, zwischen dem Rotor 6 und dem piezoelektrischen Oszillator 2 bzw. semen Lamellen 3 eine Reibungskraft übertragen zu können, durch die auf den Rotor ein Drehmoment übertragen wird. Diese Innenwandstrukur besteht aus einer Riffelung und/oder Sägezahnung und/oder Nutung und/oder Lochung und dgl. und steht mit den Außenrändern 7 der Lamellen 3 des Oszillators im zusammengebauten Zustand des piezoelektrischen Motors 1 in kraftübertragender Reibschlußverbindung, so daß die von dem Oszillator 2, der mit einer Anordnung zur Bereitstellung einer elektrischen Spannung über die Anschlüsse 15 in Verbindung steht, erzeugten Schwingungen in eine Drehbewegung des Rotors umgesetzt werden.

Der Rotor 6 wird im zusammengebauten Zustand des Motors von einer Achse 11 des Stators 4 durchgriffen und weist eine mit der Außenseite des Bodens des zylindrischen Körpers des Rotors 6 verbundenes Zahnriemenrad 14 auf, dessen Zähne 10 zwecks Übertragung der Antriebskraft des Motors auf an sich beliebge Teile in einen Zahnriemen eingreifen.

Das Spritzgußmaterial, aus dem wenigstens der Stator 4 und der Fassungskörper 5 gefertigt sind, kann auch Metallpulver und/oder Kunststoffpulver und/oder Glaspulver und/oder Gesteinspulver enthalten, um die gewünschten Materialeigenschaften sicherzustellen.

Das Spritzgußmaterial des Rotors 6, das, wie oben erläutert, eine thermoplastische Verbundwerkstofformmasse ist, weist einen Glasferanteil und/oder mineralischen Füllstoffanteil auf und bildet ein teilkristallines Polymerer, das eine kristalline Phase mit regelmäßig im Raum angeordneten Makromolekülen sowie eine amorphe Phase aus in einem ungeordneten Zustand belindlichen Makromolekülen besitzt. Zur Verdeutlichung dieser Struktur zeigt Fig. 6 den schematischen Ouerschnittsaufbau dieses Verbundwerkstoffes im Bereich der Wandung des Rotors 6. Danach ist für die überraschend gute Dauerstandsfestigkeit des Rotors unter der Reibwirkung der Lamellen 3 des Osziallators die Schichtstruktur des Wandaufbaus entscheidend, die durch mehrere Schichten senkrecht zur Fließrichtung beim Spritzgießen des Materials gekennzeichnet ist, nämlich einer Randschicht 21 aus einem Polymer, einer Zwischenschicht 19, in der die Fasern aufgrund der malen Scherbeanspruchung während des Spritzgießens deutlich in Fließrichtung orientiert sind, und eine Mittelschicht 20, in der die Fasern vorzugsweise senkrecht zur Fließrichtung orientiert sind, so daß sie im Bereich der halben Rotorformteildicke kaum einer Scherbeanspruchung ausgesetzt sind.

Aufgrund dieser Materialbeschaffenheit insbesondere des Rotors 6, aber auch des Stators 4 sowie des Formkörpers 5 wird eine wesentliche Verbesserung der Funktionstüchtigkeit sowie der Lebensdauer des piezoelektrischen Motors erreicht.

## Patentansprüche

1. Piezoelektrischer Motor, bestehend aus einem Stator mit an ihm angebrachten piezoelektrischen Oszillator, der mit einer Anordnung zur Spannungsbereitstellung in Verbindung steht und von einem Fassungskörper abgedeckt ist, sowie aus einem Rotor, der mit dem Oszillator in Reibschlußverbindung steht und dadurch von letzterem antreibbar ist, **dadurch gekennzeichnet, daß** von den drei Teilen, nämlich Stator (4), Fassungskörper (5) und Rotor (6), wenigstens der Rotor (6) aus einer thermoplastischen Verbundwerkstofformmasse mit einem Glasfaseranteil und/oder mineralischen Füllstoffanteil besteht, die ein teilkristallines Polymer bildet, das eine kristalline Phase mit regelmäßig im Raum angeordneten Makromolekülen und eine amorphe Phase aus in einem ungeordneten Zustand befindlichen Makromolekülen aufweist, und im Spritzgußverfahren hergestellt ist.

2. Piezoelektrischer Motor nach Anspruch 1, **dadurch gekennzeichnet, daß** der Stator (4) und der Fassungskörper (5) aus Polyamid mit einem 20- bis 30%igen Glasfaseranteil bestehen und im Spritzgußverfahren hergestellt ist..

3. Piezoelektrischer Motor nach Anspruch 1 oder 2, **dadurch gekennzeichnet, daß** die Verbundwerkstofformmasse des Rotors (6) auf der Basis von Polyarylamid hergestellt ist und einen E-Modul von bis zu 23 GPa bei 20 °C, eine Biegefestigkeit bis zu 400 MPa bei 20 °C, einen niedrigen thermischen Ausdehnungskoeffizienten, vergleichbar dem von Metallen, einen Elastizitätsmodul im Biegeversuch von bis zu 7 GPa bei 140 °C und eine geringe Kriechneigung aufweist, letztere gekennzeichnet durch eine bleibende Verformung nach 1.000stündiger Belastung bei 50 MPa und 50 °C von unter 1 %.

4. Piezoelektrischer Motor nach einem der Ansprüche 1 bis 3, **dadurch gekennzeichnet, daß** die Innenwandoberfläche (8) des Rotors (6) beim Spritzgießen des Teils und/oder durch spätere mechanische Bearbeitung eine Struktur erhält, die eine wirksame Reibungskraft zwischen dem Rotor (6) und dem piezoelektrischen Oszillator (2) entstehen läßt.

5. Piezoeleksscher Motor nach Anspruch 4, **dadurch gekennzeichnet, daß** die Innenwandstruktur aus einer Riffelung, Sägezahnung, Nutung, Lochung und dgl. besteht.

6. Piezoelektrischer Motor nach einem der Ansprüche 1 bis 5, **dadurch gekennzeichnet, daß** das Material wenigstens einer der Teile, nämlich Stator (4), Fassungskörper (5) und Rotor (6), Metallpulver und/oder Kohlenstoffpulver und/oder Glaspulver und/oder Gesteinspulver enthält.

7. Plezoelektrischer Motor nach einem der Ansprüche 1 bis 6, **dadurch gekennzeichnet, daß** der Oszillator (2) ringförmig ausgebildet ist und aus Piezokeramik besteht und auf seiner äußeren Oberfläche mit Lamellen (3) versehen ist, deren Außenränder (7) im zusammengebauten Zustand des Motors mit der Innenwandoberfläche (8) des Rotors (6) in die Schwingungen des Oszillators (2) auf den Rotor (6) übertragender Berührung stehen.
